# EUROPEAN PATENT APPLICATION

(11) **EP 0 990 662 A1**
(43) Date of publication of application: **05.04.2000**
(21) Application number: 99902894.7
(22) Date of filing: 12.02.1999
(51) Int. Cl.: C07J 9/00, C07J 75/00

(54) **METHOD OF PURIFYING TALL OIL STEROL**

(30) Priority: 17.02.1998 JP 5295898
(71) Applicant: Arakawa Chemical Industries, Ltd., Osaka-shi, Osaka 541-0046 (JP)
(72) Inventor: Ezaki, Yoichiro, Tsukuba-shi, Ibaraki 300-2611Ibara (JP); Abe, Takayuki, Tsukuba-shi, Ibaraki300-2611 i (JP)
(74) Representative: Mouget-Goniot, Claire
(86) International application number: JP9900619
(87) International publication number: WO9941272

(57) **Abstract**

The present invention provides a process for purifying tall oil sterols from tall oil neutral ingredients, the process comprising the steps of:
(a) contacting tall oil neutral ingredients with at least one solvent selected from the group consisting of methanol, hydrous methanol, hydrous ethanol, hydrous isopropanol and hydrous n-propanol, at a temperature above the boiling point under atmospheric pressure of the solvent,
(b) removing insolubles which do not disssolve in the solvent from the mixture thus obtained,
(c) crystallizing tall oil sterols from the solution thus obtained and collecting the crystals by filtration.
According to the process of the invention, high-purity tall oil sterols can be easily obtained from tall oil neutral ingredients.

## Description

### TECHNICAL FIELD

The present invention relates to a purification process of tall oil sterols for recovering high-purity sterols from alcoholic ingredients (hereinafter referred to as "tall oil neutral ingredients") extracted from alkali-hydrolyzed tall oil pitch or tall oil skimming, the tall oil neutral ingredients comprising sterols, diterpene alcohols, linear alcohols, etc. The purified tall oil sterols are useful as medical, cosmetic or industrial materials.

### BACKGROUND ART

Tall oil neutral ingredients extracted from alkali-hydrolyzed tall oil pitch or tall oil skimming generally comprise about 25 to 50 wt.% of sterols (hereinafter referred to as "tall oil sterols") such as β-sitosterol, β-sitostanol, campesterol, campestanol and stigmasterol; about 5 to 15 wt.% of C₂₀ diterpene alcohols such as pimarol, sandaracopimarol, isopimarol, palustrol, abietanol, dehydroabietanol and neoabietanol; and about 5 to 15 wt.% of linear alcohols such as 1-eicosanol, 1-docosanol and 1-tetracosanol (Jour. Amer. Oil Chem. Soc., Vol. 52, 334-338 (1975)). In addition to the compounds described above, tall oil neutral ingredients contain, as coloring matters, miscellaneous compounds including high molecular ones, such as black viscous oils or solids. Therefore, the composition of tall oil neutral ingredients is complicated.

Japanese Examined Patent Publication No. 44,120/1980 discloses purification of tall oil sterols from tall oil neutral ingredients by distillation. However, for separating tall oil sterols from coloring matters including high molecular compounds by the distillation process, distillation needs to be carried out under high-vacuum, high-temperature conditions, since the desired compounds, i.e., tall oil sterols, have high boiling points. Distillation under such conditions causes pyrolysis, inevitably resulting in a lowered recovery. Further, distillation alone cannot recover high-purity sterols, necessitating additional manipulations such as recrystallization.

Recrystallization using solvent is also known as a process for separating tall oil sterols from tall oil neutral ingredients. The recrystallization process generally uses a single solvent or a solvent mixture, and purifies tall oil sterols by utilizing the differences between tall oil sterols and other compounds in solubility at a specific temperature or in a specific solvent. For example, methanol can be mentioned as a solvent that is capable of recovering tall oil sterols from tall oil neutral ingredients by recrystallization with a high selectivity. However, the solubility of tall oil sterols in methanol is low even at the boiling point of methanol, and thus a great amount of methanol is required to obtain high-purity tall oil sterols, and a concentration step is necessary to achieve an improved recovery. Accordingly, the recrystallization process using methanol is not suitable for commercial scale production.

For purification of tall oil sterols, impurity compounds such as linear alcohols need to be removed from the tall oil neutral ingredients. When solvents other than methanol are used for recrystallization of tall oil sterols, it is difficult to separate tall oil sterols from compounds such as linear alcohols, which are similar to tall oil sterols in solubility in solvents. Therefore, recrystallization need to be repeated several times to improve the purity of the resulting tall oil sterols. Accordingly, the recrystallization process using solvents other than methanol has a problem with the overall recovery.

Further, the specifications of U.S. Patents Nos. 3,691,211 and 4,524,024 disclose other purification processes for recovering tall oil sterols, the processes comprising the steps of contacting tall oil neutral ingredients with a ketone solvent or halogen solvent at 60°C, filtering off substances insoluble in the solvent, vaporizing the solvent of the filtrate, boiling the resulting dry product in methanol for 1 hour, and collecting tall oil sterols by filtration. These processes, however, involve complicated manipulations and necessitate use of two solvents, and therefore are not satisfactory from a commercial point of view.

### DISCLOSURE OF INVENTION

An object of the present invention is to provide a process for obtaining high-purity tall oil sterols from tall oil neutral ingredients with ease.

The present inventors did extensive research to solve the above problems and found that these problems can be solved by recrystallizing tall oil neutral ingredients using the solvents specified below and by carrying out the following steps. The present invention has been accomplished based on these findings.

The present invention provides a process for purifying tall oil sterols from tall oil neutral ingredients, the process comprising the steps of:
(a) contacting tall oil neutral ingredients with at least one solvent selected from the group consisting of methanol, hydrous methanol, hydrous ethanol, hydrous isopropanol and hydrous n-propanol, at a temperature above the boiling point under atmospheric pressure of the solvent,
(b) removing insolubles which do not dissolve in the solvent from the mixture thus obtained,
(c) crystallizing tall oil sterols from the solution thus obtained and collecting the resulting crystals by filtration.

The tall oil neutral ingredients for use in the invention are alcoholic ingredients obtained from alkali-hydrolyzed tall oil pitch or tall oil skimming, the ingredients comprising sterols (tall oil sterols), diterpene alcohols, linear alcohols, and other compounds. The tall oil neutral ingredients can be extracted from alkali-hydrolyzed tall oil pitch or tall oil skimming by any conventional methods (for example those disclosed in Jour. Amer. Oil Chem. Soc., Vol. 52, 334-338 (1975), and specifications of U.S. Patents Nos. 3,691,211 and 4,524,024).

### Step (a)

In the process of the invention, the tall oil neutral ingredients are first contacted with at least one solvent selected from the group consisting of methanol, hydrous methanol, hydrous ethanol, hydrous isopropanol and hydrous n-propanol.

These solvents may be used singly or in combination, but use of a single solvent is desirable from a commercial point of view. Methanol is particularly preferred. The water content of the hydrous solvents, i.e., hydrous methanol, hydrous ethanol, hydrous isopropanol and hydrous n-propanol, is not limited as long as the solvents are capable of dissolving tall oil sterols but incapable of dissolving coloring matters to be removed, when the tall oil neutral ingredients are contacted with said solvents. A preferred water content of hydrous methanol is about 20 wt.% or less, more preferably about 0 to 10 wt.%. A preferred water content of hydrous ethanol, hydrous isopropanol and hydrous n-propanol is about 10 to 40 wt.%, more preferably about 15 to 35 wt.%.

It is difficult to remove coloring matters from the tall oil neutral ingredients using solvents other than those specified above, since high-molecular compounds as coloring matters are dissolved, together with the tall oil sterols, in the solvent. Anhydrous ethanol, anhydrous isopropanol and anhydrous n-propanol are disadvantageous for the same reason.

The proportion of the solvent to be used varies according to the kind of the solvent and the temperature at the time of dissolution, but is preferably about 100 to 1500 wt.% relative to the tall oil neutral ingredients. When the proportion of the solvent is less than 100 wt.%, it becomes difficult to dissolve all the tall oil sterols. On the other hand, a proportion exceeding 1500 wt.%, although causing no problem, is not advantageous in view of the cost of the solvent and the recovery cost. Consequently, the proportion of the solvent to be used is more preferably at least 200 wt.%, and more preferably up to 700 wt.%.

The method of contacting is not limited and may be any conventional ones, such as stirring and counter-current distribution. Means for stirring or counter-current distribution are not limited.

According to the invention, the tall oil neutral ingredients are contacted with the solvent at a temperature above the boiling point under atmospheric pressure of the solvent used. When contacting the tall oil neutral ingredients with the solvent at such a temperature, the tall oil sterols show increased solubility in the solvent. On the other hand, the coloring matters in the tall oil neutral ingredients are present in the solution in the form of insolubles (black tar) which do not dissolve in the solvent.

If this step is conducted at a temperature not higher than the boiling point under atmospheric pressure of the solvent, a great amount of solvent is required because the tall oil sterols exhibit very low solubility in such solvents, resulting in a markedly low recovery.

Specifically, the temperature at which the tall oil neutral ingredients are contacted with the solvent is not limited as long as it is higher than the boiling point under atmospheric pressure of the solvent used, but is preferably 70 to 170°C. This temperature range corresponds to a range from (T_{b}+5°C) to 170°C, wherein T_{b} represents the boiling point under atmospheric pressure of the solvent used in the invention. A more preferred temperature is a temperature not lower than 80°C [in particular not lower than (T_{b}+15°C), wherein T_{b} is as defined above] but not higher than 130°C. Then the temperature is excessively high, the coloring matters, together with the tall oil sterols, are likely to be dissolved in the solvent, making it difficult to selectively remove the coloring matters. Since this step is carried out under elevated pressure, and therefore is carried out in a closed vessel. The pressure to be applied depends on the kinds, amounts and proportions of the solvent and tall oil neutral ingredients held in the vessel, but is usually 1.5 to 30 kg/cm^{2.}

The period for contacting is not limited as long as it is sufficient to dissolve the tall oil sterols in the solvent, but is usually 10 minutes to 4 hours.

### Step (b)

After the contacting in Step (a), the insoluble substances including coloring matters are precipitated. Since the black tar containing coloring matters is insolubles which do not dissolve in the solvent and is in a liquid state, it can be easily separated from the solution containing tall oil sterols, by a technique such as decantation. The above procedure removes coloring matters from the tall oil neutral ingredients to facilitate purification of tall oil sterols.

### Step (c)

The remaining solution from which the insoluble substances have been removed is cooled to a suitable temperature to crystallize tall oil sterols, and the resulting crystals are collected by filtration. During the cooling step, a suitable amount of the solvent may be distilled off. The temperature for crystallization and filtration is not limited, but is preferably 50°C or above, more preferably 50 to 80°C. If the crystallization or filtration is carried out at a temperature below 50°C, linear alcohols and other compounds are crystallized together with the tall oil sterols, and are liable to lower the purity of the resulting tall oil sterols. The solution may be stirred at the time of crystallization.

The tall oil sterols collected by filtration are usually washed at 50 to 80°C. As the washing solvent, the same solvent as used in the contacting step is usually employed. The proportion of the washing solvent to be used is not limited but is usually about 50 to 400 wt.% relative to the tall oil sterols obtained.

The obtained tall oil sterols are dried in a suitable manner.

The tall oil sterols thus purified from the tall oil neutral ingredients usually have a purity of 80 to 97 wt.%. The recovery of the tall oil sterols is usually 20 to 95%, although depending on the tall oil sterol content in the starting material and conditions for crystallization and filtration.

### Step (d)

Most of the solvent can be recovered from the filtrate obtained by filtration and washings by simple distillation. The remainder after removal of the solvent from the filtrate and washings (hereinafter referred to as "remainder of the filtrate") still contains tall oil sterols. The tall oil sterols can be recovered from the remainder of the filtrate by vacuum distillation. Specifically, low-boiling diterpene alcohols and linear alcohols can be removed from the remainder of the filtrate by vacuum distillation to recover tall oil sterols as residue. The method of vacuum distillation is preferably flash or thin-film distillation which subjects the tall oil sterols to the minimum thermal hysteresis. Since the tall oil neutral ingredients have been contacted with the specific solvent to separate the coloring matters insoluble in the solvent, the remainder of the filtrate containing tall oil sterols is substantially free from coloring matters such as high-molecular compounds. Thus, tall oil sterols can be recovered from the remainder of the filtrate and subjected Steps (a) to (c), to thereby obtain high-purity tall oil sterols.

The tall oil sterols thus obtained are put together, achieving an improved overall recovery. The diterpene alcohols and linear alcohols distilled off can be separated from each other by using additional distillation towers to obtain high-purity products, and are useful as by-products.

### INDUSTRIAL APPLICABILITY

According to the process of the present invention, coloring matters including high-molecular compounds are removed before crystallization and filtration, so that high-purity tall oil sterols can be efficiently obtained from tall oil neutral ingredients. Further, since the filtrate obtained after crystallization and filtration is substantially free from coloring matters, tall oil sterols can be recovered from the filtrate by distilling off diterpene alcohols and linear alcohols.

### EXAMPLES

The following Examples and Comparative Example are provided to illustrate the invention in further detail and are not to limit the scope of the invention.

### Example 1

A pressure-resistant glass reaction vessel equipped with a stirrer and a thermometer and having an outlet port at its lower part was charged with 100 g of tall oil neutral ingredients (hydroxyl number: 149, tall oil sterol content: 45 wt.%) and 300 g of methanol, and sealed. The content of the reaction vessel was heated to 90°C and stirred for 30 minutes. Five minutes after cessation of stirring, insoluble black tar precipitated on the bottom was drawn off through the outlet port.

Stirring was started again, and the temperature in the reaction vessel was lowered to 65°C to form crystals. The resulting slurry was filtered through a pressure-resistant filter maintained at 65°C to collect the crystals, which was washed with 30 g of boiling methanol and dried, giving 21 g of crystals. The obtained crystals of tall oil sterols had a purity of 96 wt.% (recovery: 44.8%).

The filtrate and washings were put together, and the mixture was distilled to remove methanol, giving 66 g of viscous solid containing 35 wt.% of tall oil sterols. The solid was distilled in vacuo to thereby obtain 8.5 g of fraction 1 (133 Pa, 146-182°C, hydroxyl number: 176) and 11 g of fraction 2 (133 Pa, 182-240°C, hydroxyl number: 151). Fractions 1 and 2 did not contain tall oil sterols. Further obtained was 46 g of distillation residue containing 49 wt.% of tall oil sterols.

The tall oil sterol content mentioned in the Examples and Comparative Example was determined by subjecting a solution of an analysis sample in a solvent mixture of tetrahydrofuran and methanol to gas chromatography. Δ-4-androstene-3,17-dione (a product of Tokyo Kasei K.K., purity: 99.5%) was used as an internal standard. The calibration curve was prepared in advance using pure tall oil sterols (obtained by recrystallizing the crystals of tall oil sterols obtained Example 1 from ethanol twice; comprising of β-sitosterol, β-sitostanol, campesterol, campestanol and stigmasterol), and the tall oil sterol content was determined.
Capillary column: SAC-5 (a product of Supelco Inc.) having a liquid phase thickness of 25 micron, and an inner diameter of 0.25 mm × 30 m.

### Example 2

A pressure-resistant glass reaction vessel equipped with a stirrer and a thermometer and having an outlet port at its lower part was charged with 100 g of tall oil neutral ingredients (hydroxyl number: 149, tall oil sterol content: 45 wt.%) and 500 g of methanol, and sealed. The content of the reaction vessel was heated to 90°C and stirred for 30 minutes. Five minutes after cessation of stirring, insoluble black tar precipitated on the bottom was drawn off through the outlet port. Then, stirring was started again, and the temperature in the reaction vessel was lowered to 55°C to form crystals. The resulting slurry was filtered through a pressure-resistant filter maintained at 55°C to collect the crystals, which was washed with 30 g of boiling methanol and dried, giving 14.2 g of crystals. The obtained crystals of tall oil sterols had a purity of 97 wt.% (recovery: 30.6%).

### Example 3

A pressure-resistant glass reaction vessel equipped with a stirrer and a thermometer and having an outlet port at its lower part was charged with 100 g of tall oil neutral ingredients (hydroxyl number: 149, tall oil sterol content: 45 wt.%), 350 g of isopropanol and 150 g of water, and sealed. The content of the reaction vessel was heated to 110°C and stirred for 30 minutes. Five minutes after cessation of stirring, insoluble black tar precipitated on the bottom was drawn off through the outlet port. Then, stirring was started again, and the temperature in the reaction vessel was lowered to 80°C to form crystals. The resulting slurry was filtered through a pressure-resistant filter maintained at 80°C to collect the crystals, which was washed with 70 g of hydrous isopropanol (isopropanol content: 70 wt.%) at 80°C and dried, giving 19 g of crystals. The obtained crystals of tall oil sterols had a purity of 96 wt.% (recovery: 40.5%).

### Example 4

A pressure-resistant glass reaction vessel equipped with a stirrer and a thermometer and having an outlet port at its lower part was charged with 100 g of tall oil neutral ingredients (hydroxyl number: 149, tall oil sterol content: 45 wt.%) and 500 g of methanol, and sealed. The content of the reaction vessel was heated to 80°C and stirred for 30 minutes. Five minutes after cessation of stirring, insoluble black tar precipitated on the bottom was drawn off through the outlet port. Then, stirring was started again, and the temperature in the reaction vessel was lowered to 25°C to form crystals. The resulting slurry was filtered through a filter to collect the crystals, which was washed with 70 g of methanol at 25°C and dried, giving 47.5 g of crystals. The obtained crystals of tall oil sterols had a purity of 82 wt.% (recovery: 86.6%).

### Comparative Example 1

A reaction vessel equipped with a stirrer and a thermometer and having an outlet port at its lower part was charged with 100 g of tall oil neutral ingredients (hydroxyl number: 149, tall oil sterol content: 45 wt.%) and 500 g of methanol. The content of the reaction vessel was heated until boiling under atmospheric pressure, and refluxed for 1 hour. The insoluble substances remained as black solid, which was then removed by decantation. The resulting methanol solution was concentrated to 250 g under atmospheric pressure to form crystals. The resulting slurry was filtered through a filter maintained at 65°C to collect the crystals, which was washed with 20 g of boiling methanol and dried, giving 8.8 g of crystals. The obtained crystals of tall oil sterols had a purity of 92 wt.% (recovery: 18.0%).

## Claims

1. A process for purifying tall oil sterols from tall oil neutral ingredients, the process comprising the steps of:
(a) contacting tall oil neutral ingredients with at least one solvent selected from the group consisting of methanol, hydrous methanol, hydrous ethanol, hydrous isopropanol and hydrous n-propanol, at a temperature above the boiling point under atmospheric pressure of the solvent,
(b) removing insolubles which do not disssolve in the solvent from the mixture thus obtained,
(c) crystallizing tall oil sterols from the solution thus obtained and collecting the crystals by filtration.

2. A process according to claim 1 wherein the solvent is methanol.

3. A process according to claim 1 wherein the proportion of the solvent is 100 to 1500 wt.% relative to the tall oil neutral ingredients.

4. A process according to claim 1 wherein the contacting in Step (a) is carried out at 70 to 170°C.

5. A process according to claim 1 wherein the crystallization and filtration in Step (c) are carried out at 50°C or above.

6. A process according to claim 1 further comprising the step of:
(d) removing the solvent from the filtrate obtained in Step (c) and recovering tall oil sterols by distillation.
